# EUROPÄISCHE PATENTSCHRIFT

(11) **EP 1 069 015 B1**
(45) Veröffentlichungstag und Bekanntmachung des Hinweises auf die Patenterteilung: **26.11.2003**
(21) Anmeldenummer: 00111081.6
(22) Anmeldetag: 02.06.2000
(51) Int. Cl.: B60T 13/68, B60T 17/18

(54) **Druckmittelbetätigte Fahrzeugbremsanlage**
Pressure actuated brake system
Installation de freinage actionnée par moyen de pression

(30) Priorität: 16.07.1999 DE 19933483
(43) Veröffentlichungstag der Anmeldung: 17.01.2001
(73) Patentinhaber: KNORR-BREMSE Systeme für Nutzfahrzeuge GmbH, 80809 München (DE)
(72) Erfinder: Stumpe, Werner, 70274 Stuttgart (DE)

(56) Entgegenhaltungen:
- EP-A- 0 726 190
- EP-A- 0 738 640
- US-A- 5 624 163

## Beschreibung

### Stand der Technik

Die Erfindung geht aus von einer Fahrzeugbremsanlage nach der Gattung des Hauptanspruchs.

Aus der EP 0 726 190 ist eine derartige Fahrzeugbremsanlage bekannt und für ein Nutzfahrzeug vorgesehen. Dabei dient ein erster Bremskreis als pneumatisch betätigbarer Hinterachs-Bremskreis für die beiden Räder der Hinterachse und ein zweiter Bremskreis als pneumatisch betätigbarer Vorderachs-Bremskreis für die der Vorderachse. Bei Ausfall des einen Bremskreises soll der andere Bremskreis des Nutzfahrzeuges noch ausreichend verzögern. Die Bremszylinder des Hinterachs - Bremskreises sind jeweils als Kombibremszylinder ausgebildet, die über eine erste Steuerventileinrichtung in Abhängigkeit von einem dem Hinterachs-Bremskreis zugeordneten Steuersignal eines Mehrkreis-Bremswertgebers mit einem Druckluftspeicher für den Hinterachs-Bremskreis verbindbar ist. Die Bremszylinder des Vorderachs-Bremskreises sind über eine zweite Steuerventileinrichtung in Abhängigkeit von einem dem Vorderachs-Bremskreis zugeordneten Steuersignal des Mehrkreis-Bremswertgebers mit einem Druckluftspeicher für den Vorderachs-Bremskreis verbindbar. Die zweite Steuerventileinrichtung weist einen mit dem Druckluftspeicher für den Vorderachs-Bremskreis verbundenen ersten Druckeingang und einen mit einem Steuerausgang des Mehrkreis-Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die zweite Steuerventileinrichtung weist ferner mit den Bremszylindern der Vorderachse verbundene Druckausgänge auf.

Bedingt durch die dynamische Achslastverlagerung bei einem Bremsvorgang muß der größte Teil der Bremskraft von den Vorderrädern aufgebracht werden. Bei Nutzfahrzeugen mit hoher Vorderachslast und zumindest zeitweise niedriger Hinterachslast trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises, beispielsweise durch einen leeren Druckluftspeicher im Vorderachs-Bremskreis, ist daher nicht mehr sichergestellt, daß die nun von den allein durch die Hinterräder gelieferte Bremskraft ausreicht, um die vom Gesetzgeber vorgeschriebene Verzögerung aufzubringen.

Aus diesem Grund ist bei der bekannten Fahrzeugbremsanlage eine zwischen der zweiten Steuerventileinrichtung und einem Bremszylinder des rechten Vorderrades angeordnete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Unbefriedigend bei diesem Stand der Technik ist jedoch, daß sich durch diesen asymmetrischen Schaltungsaufbau unterschiedliche Strömungswiderstände für die Achsseiten der Vorderachse ergeben, die bei einer intakten Bremsung dort zu dynamisch ungleichen Bremsdruckverläufen führen.

### Vorteile der Erfindung

Die erfindungsgemäße druckmittelbetätigte Fahrzeugbremsanlage hat demgegenüber den Vorteil, daß sich bei einer intakten Bremsung aufgrund der Anordnung der erfindungsgemäßen Umschaltventileinrichtung zwischen der Zuströmseite der zweiten Steuerventileinrichtung und der Abströmseite der beiden Druckmittelquellen symmetrische Strömungswiderstände für beide Achsseiten der Vorderachse ergeben, während bei einem Ausfall des Vorderachs-Bremskreises die Hilfsbremswirkung durch Umschalten auf eine vom Vorderachs-Bremskreis unabhängige Druckmittelquelle beiden Bremszylindern der Vorderachse zuführbar ist.

Weitere vorteilhafte Weiterbildungen und Ausgestaltungen der Erfindung ergeben sich durch die in den Unteransprüchen aufgeführten Maßnahmen.

### Zeichnungen

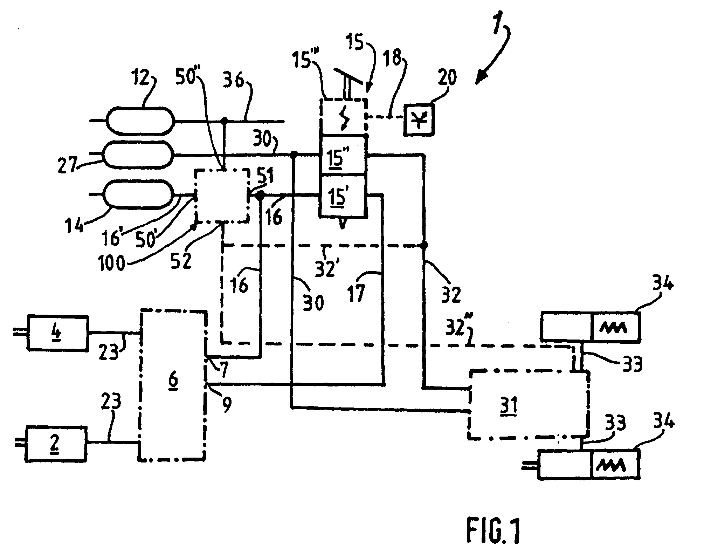

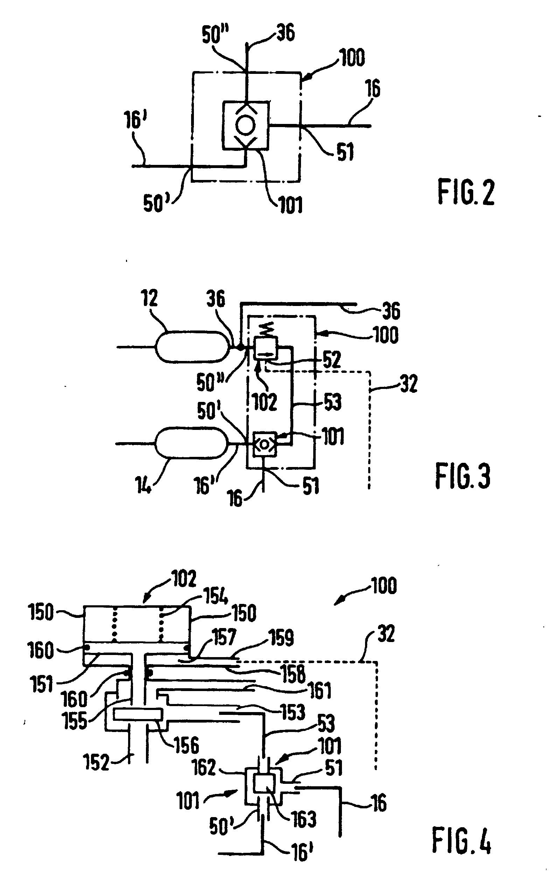

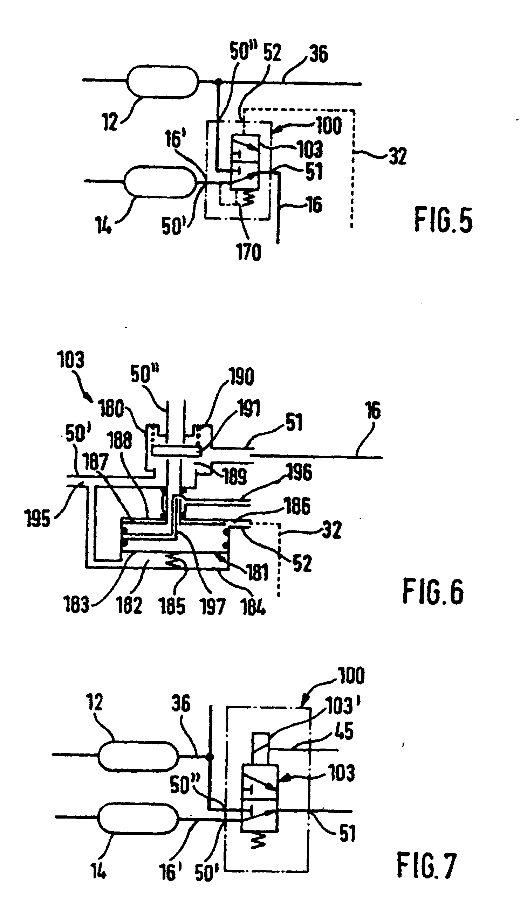

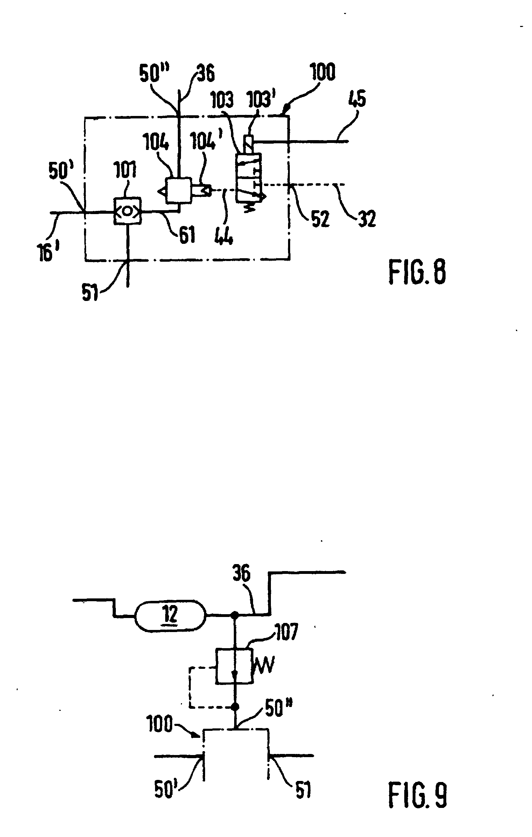

Ausführungsformen der Erfindung sind in der nachfolgenden Beschreibung und in den Zeichnungen näher erläutert. Letztere zeigen in Fig. 1 einen schematischen Schaltplan einer druckmittelbetätigten Fahrzeugbremsanlage mit der symbolisch dargestellten erfindungsgemäßen Umschaltventileinrichtung. Fig. 2 zeigt ebenfalls als schematischen Schaltplan eine erste Ausführungsform der erfindungsgemäßen Umschaltventileinrichtung. Fig. 3 zeigt eine zweite Ausführungsform. Fig. 4 veranschaulicht in einer Schnittansicht eine stark schematisch gehaltene Realisierung der zweiten Ausführungsform der erfindungsgemäßen Umschaltventileinrichtung. Fig. 5 zeigt eine dritte Ausführungsform. Fig. 6 veranschaulicht in einer Schnittansicht eine stark schematisch gehaltene Realisierung der dritten Ausführungsform der erfindungsgemäßen Umschaltventileinrichtung. Fig. 7 und 8 zeigen jeweils in einem schematischen Schaltplan eine elektrisch betätigbare vierte und fünfte Ausführungsform. Fig. 9 zeigt in einem Ausschnitt von Fig. 1 eine erfindungsgemäße Ausführungsvariante.

### Beschreibung der Ausführungsbeispiele

Die in Fig. 1 in ihrer Gesamtheit mit 1 bezeichnete druckmittelbetätigte Fahrzeugbremsanlage ist eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, welche von einem Druckregelmodul 6 angesteuert sind. Das Druckregelmodul 6 der Vorderachse ist mit seinem ersten Druckeingang 7 über eine Umschaltventileinrichtung 100 mit Druckluftspeichern 12 oder 14 verbindbar, während sein zweiter Druckeingang 9 an die Steuerseite eines Vorderachskanals 15' eines Betriebsbremsventils 15 angeschlossen ist.

Der Vorderachskanal 15' des Betriebsbremsventils 15 ist eingangsseitig mittels der Umschaltventileinrichtung 100 über eine Vorratsdruckleitung 16 mit dem Druckluftspeicher 14 der Vorderachse verbindbar, um in Abhängigkeit von der Kraft, mit welcher der Fahrer das Steuerpedal betätigt, proportionale Steuerdrucksignale in eine Steuerdruckleitung 17 der Vorderachse einzusteuern.

Zusätzlich wird bei Betätigung des Betriebsbremsventils 15 in einem elektrischen Teil 15''' des Betriebsbremsventils 15 ein proportionales elektrisches Steuersignal erzeugt und über eine elektrische Leitung 18 an eine zentrale elektronische Steuereinheit 20 geleitet, welche mittels einer-nicht dargestellten - elektrischen Steuerleitung das Druckregelmodul 6 der Vorderachse ansteuert. In Abhängigkeit von den elektrischen Steuersignalen wird in dem Druckregelmodul 6 der Vorderachse in bekannter Weise ein modulierter Steuerdruck erzeugt und über pneumatische Bremsdruckleitungen 23 in die Bremszylinder 2, 4 eingesteuert. Der Druckluftspeicher 14 für die Vorderachse, der elektrische Teil 15''' des Betriebsbremsventils 15, die zentrale elektronische Steuereinheit 20, die zugeordneten elektrischen Steuerleitungen, das Druckregelmodul 6, die Bremsdruckleitungen 23 und die Bremszylinder 2, 4 bilden zusammen einen elektropneumatischen Vorderachs-Bremskreis.

Die Schaltungslogik des Druckregelmoduls 6 behandelt die elektrischen Steuersignale des elektropneumatischen Vorderachs-Bremskreises vorrangig vor den über die Steuerdruckleitung 17 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist. Der elektro-pneumatische Vorderachs-Bremskreis überschneidet sich teilweise mit dem pneumatischen Vorderachs-Bremskreis, der den Druckluftspeicher 14 für die Vorderachse, den Vorderachskanal 15' des Betriebsbremsventils 15, die Steuerdruckleitung 17, das Druckregelmodul 6, die Bremsdruckleitungen 23 und die beiden Bremszylinder 2, 4 umfaßt.

Das Druckregelmodul 6 der Vorderachse ermöglicht neben der Regelung des Bremsdruckes durch integrierte ABS (Anti-Blockier-System) - Funktionen eine individuelle Anpassung des Bremsdruckes an das Drehverhalten der gebremsten Vorderräder, weiches von radbezogenen Drehzahlsensoren gemessen und mittels elektrischer Leitungen an das Druckregelmodul 6 geleitet wird.

In analoger Weise sind ein elektro-pneumatischer Hinterachs-Bremskreis und ein diesem gegenüber nachrangiger pneumatischer Hinterachs-Bremskreis aufgebaut, wobei für die Hinterachse ein eigener Druckluftspeicher 27 vorgesehen ist, welcher durch eine Vorratsdruckleitung 30 einerseits mit dem Eingang eines Hinterachskanals 15" des Betriebsbremsventils 15 und andererseits mit einem Druckregelmodul 31 der Hinterachse in Verbindung steht.

Ausgangsseitig steuert das Betriebsbremsventil 15 zum einen mittels einer Steuerdruckleitung 32 Steuerdrucksignale in das Druckregelmodul 31 der Hinterachse ein, das über pneumatische Bremsdruckleitungen 33 mit Kombibremszylindem 34 des rechten und linken Hinterrades in Verbindung steht. Zum anderen werden die vom Betriebsbremsventil 15 über die elektrischen Leitung 18 an die zentrale elektronische Steuereinheit 20 ausgesteuerten elektrischen Signale mittels einer - nicht dargestellten - elektrischen Steuerleitung in das Druckregelmodul 31 der Hinterachse eingesteuert.

In Abhängigkeit der von der zentralen elektronischen Steuereinheit 20 über die zugeordneten elektrischen Steuerleitungen herangeführten elektrischen Steuersignale bzw. bei Ausfall der elektro-pneumatischen Steuerkreise in Abhängigkeit der über die pneumatischen Steuerdruckleitungen 17, 32 herangeführten Steuerdrücke werden in den Druckregelmodulen 6, 31 der Vorderachse und der Hinterachse aus den über die Vorratsdruckleitungen 16, 30 herangeführten Vorratsdrücke jeweils achsweise die Bremsdrücke erzeugt, welche jeweils an einem Druckausgang eines Druckregelmoduls 6, 31 anstehen und über die pneumatischen Bremsdruckleitungen 23, 33 in die nachgeschalteten Bremszylinder 2, 4 bzw. Kombibremszylinder 34 eingesteuert werden.

Die erfindungsgemäße Umschaltventileinrichtung 100 ist mit einem ersten Druckeingang 50' über eine pneumatische Verbindungsleitung 16' mit dem der Vorderachse zugeordneten Druckluftspeicher 14 verbunden, während ein zweiter Druckeingang 50" über die Vorratsdruckleitung 36 mit dem als Hilfsspeicher dienenden Druckluftspeicher 12 pneumatisch verbunden ist. Ein Druckausgang 51 der Umschaltventileinrichtung 100 ist über die Vorratsdruckleitung 16 einerseits an den Vorderachskanal 15' des Betriebsbremsventils 15 angeschlossen und andererseits mit dem Druckeingang 7 des Druckregelmoduls 6 verbunden. Ferner ist ein optional vorgesehener pneumatischer Steuerdruckeingang 52 der Umschaltventileinrichtung 100 entweder über eine Steuerdruckleitung 32' an die vom Hinterachskanal 15" des Betriebsbremsventils 15 zum Druckregelmodul 31 der Hinterachse führende Steuerdruckleitung 32 angeschlossen oder über ein Leitung 32" direkt mit einem Druckeingang des Druckregelmoduls 31 verbunden.

Fig. 2 zeigt eine erste Ausführungsform der erfindungsgemäßen Umschaltventileinrichtung 100, welche ein Wechselventil 101 mit einem ersten Druckeingang 50', einem zweiten Druckeingang 50" und einem Druckausgang 51 umfaßt, wobei der erste Druckeingang 50' um ein vorbestimmtes Druckmaß Δp gegenüber dem zweiten Druckeingang bevorrechtigt ist, so daß der mit dem größeren Vorratsdruck beaufschlagte Druckeingang 50', 50" auf den Druckausgang 51 durchgeschaltet wird. Stehen jedoch an den beiden Druckeingängen 50', 50" etwa gleich große Drücke an, so wird der bevorrechtigte erste Druckeingang 50' auf den Druckausgang 51 durchgeschaltet. Da der erste Druckeingang 50' über die Verbindungsleitung 16' mit dem Druckluftspeicher 14 für die Vorderachse und der zweite Druckeingang 50" über die Leitung 36 mit dem Hilfsspeicher 12 verbunden ist, bleibt bei normalen Druckbedingungen im Vorderachs-Bremskreis, d.h. wenn im Druckluftspeicher 14 der Vorderachse oder in der Leitung 16 keine Druckverluste auftreten, der erste Druckeingang 50' auf den Druckausgang 51 durchgeschaltet. In diesem Fall gelangt der Vorratsdruck aus dem Druckluftspeicher 14 über die Leitung 16 einerseits an den Vorderachskanal 15' des Betriebsbremsventils 15 und andererseits an den Druckeingang 7 des Druckregelmoduls 6. Bei Auftreten eines Druckverlustes im Vorderachs-Druckluftspeichers 14 sinkt der Druck am ersten Druckeingang 50' des Wechselventils 101 ab, so daß nunmehr der am zweiten Druckeingang 50" anstehende stationäre Druck aus dem Hilfsspeicher 12 auf den Druckausgang 51 durchgeschaltet wird und somit einerseits zum Vorderachskanal 15' des Betriebsbremsventils 15 und andererseits zum Druckeingang 7 des Druckregelmoduls 6 gelangt.

Fig. 3 zeigt eine zweite Ausführungsform der erfindungsgemäßen Umschaltventileinrichtung 100, die ein Wechselventil 101 und einen federbelastet ausgebildeten Druckbegrenzer 102 umfaßt, wobei der erste Druckeingang 50' des Wechselventils 101 über die Vorratsdruckleitung 16' mit dem der Vorderachse zugeordneten Druckluftspeicher 14 und ein als zweiter Druckeingang 50" der Umschaltventileinrichtung 100 fungierender Druckeingang des Druckbegrenzers 102 über die Leitung 36 mit dem Hilfsspeicher 12 verbunden ist. Druckausgangsseitig steht der Druckbegrenzer 102 über die Leitung 53 mit dem zweiten Druckeingang des Wechselventils 101 in Verbindung. Zur pneumatischen Ansteuerung dieser Ausführungsform der Umschaltventileinrichtung 100 weist der Druckbegrenzer 102 einen Steueranschluß 52 auf, der an einen Zweig der Steuerdruckleitung 32 angeschlossen ist. Durch diese Maßnahme öffnet der Druckbegrenzer 102 die Vorratsdruckleitung 36 ausschließlich bei Betätigung des Betriebsbremsventils 15, wobei Druckmittel aus dem Hilfsspeicher 12 über die Leitung 53 zu dem zweiten Druckeingang des Wechselventils 101 gelangen. Dabei schaltet der Druckbegrenzer 102 bei einer vorbestimmten Druckhöhe aus seiner sperrenden Ruhestellung in Abhängigkeit von dem durch das Betriebsbremsventil 15 ausgesteuerten Steuerdruck p_{HA}. Im Unterschied zur ersten Ausführungsform wird diese Ausführungsform durch den Bremsdruck geschaltet, der vom Betriebsbremsventil 15 zur Hinterachse ausgesteuert wird. Dabei ist durch die lediglich zeitweise auftretende beidseitige Beaufschlagung des Wechselventils 101 die Dichtheit und Kreistrennung der Druckluftspeicher 12, 14 überprüfbar. Somit ergibt sich für die zweite Ausführungsform folgende Funktionsweise: Treten im Druckluftspeicher 14 der Vorderachse oder in der zugeordneten Leitung 16 keine Druckverluste auf, so steht am ersten Druckeingang 50' des Wechselventils 101 der stationäre Druck aus dem Druckluftspeicher 14 an, während an seinem zweiten Druckeingang lediglich der durch den Druckbegrenzer 102 nach Maßgabe des Steuerdrucks des Hinterachs-Rückhaltkreises ausgesteuerte druckhöhenbegrenzte Druck aus dem Hilfsspeicher 12 ansteht, so daß der am ersten Druckeingang 50' anstehende stationäre Druck auf den Druckausgang 51 durchgeschaltet wird. Beim Auftreten eines Druckverlustes im Vorderachs-Druckluftspeicher 14 sinkt demgegenüber der Druck am ersten Druckeingang 50' des Wechselventils 101 ab, so daß nunmehr der höhere am zweiten Druckeingang anstehende gestufte Druck aus dem Hilfsspeicher 12 auf den Druckausgang 51 durchgeschaltet und somit in den Druckeingang 7 des Druckregelmoduls eingesteuert wird.

Fig. 4 veranschaulicht eine stark schematisiert gehaltene Realisierung der zweiten Ausführungsform der erfindungsgemäßen Umschaltventileinrichtung 100. Dabei weist der Druckbegrenzer 102 ein Ventilgehäuse 150 auf, innerhalb dessen ein Ventilkolben 151 längsbeweglich angeordnet ist, um ein Einlaß- und ein Auslaßventil 152, 153 zu betätigen. Mittels einer Ventilfeder 154 ist der Ventilkolben 151 mit seinem endseitigen Kolbenzapfen 155 gegen einen am Einlaßventil 152 gelagerten Schließkörper 156 vorgespannt. Eine Steuerkammer 157 ist durch eine Wirkfläche des Ventilkolbens 151 und einen Zwischenboden 158 des Ventilgehäuses 150 begrenzt und weist einen Einlaß 159 für den Steueranschluß 52 der Umschaltventileinrichtung 100 auf. Dichtungen 160 zwischen dem Ventilkolben 151 und dem Ventilgehäuse 150 dienen zur Abdichtung der Steuerkammer 157 gegenüber dem Einlaß- und Auslaßventil 152, 153. Ferner ist dem Einlaß 159 zur Steuerkammer 157 und dem Auslaßventil 153 ein Zwischenentlüftungskanal 161 zwischengeordnet. Liegt nun am Einlaß 159 und damit in der Steuerkammer 157 kein ausreichender Steuerdruck p_{HA} an, so beaufschlagt der Ventilkolben 151 unter der Wirkung der Ventilfeder 154 den Schließkörper 156, wobei der Schließkörper 156 das Einlaßventil 152 abdichtet, so daß ein durch das Einlaß- und Auslaßventil 152, 153 definierter Strömungskanal geschlossen ist. Steht jedoch in der Steuerkammer 157 ein ausreichender Steuerdruck p_{HA} an, so erfährt der Ventilkolben 151 eine resultierende Kraft nach oben, wobei der Kolbenzapfen 155 und der benachbarte Schließkörper 156 vom Einlaßventil 152 abheben und somit den Strömungskanal vom Einlaßventil 152 zum Auslaßventil 153 freigeben.

In diesem Fall strömen, da das Einlaßventil 152 dem Druckeingang 50" entspricht, über diesen Strömungskanal Druckmittel aus dem Hilfsspeicher 12 zum Auslaßventil 153, wobei der am Auslaßventil 153 anstehende Druck eine Funktion des der Steuerkammer 157 zugeführten Steuerdrucks p_{HA} und somit gestuft ist. Über die Verbindungsleitung 53 steht das Auslaßventil 153 des Druckbegrenzers 102 mit dem zweiten Druckeingang des Wechselventils 101 in Verbindung, wobei das Wechselventil 101 ein Ventilgehäuse 162 mit einem darin aufgenommenen Ventilkörper 163 umfaßt, welcher zur wechselweisen Betätigung des ersten und zweiten Druckeingangs des Wechselventils 101 vorgesehen ist. Über die Vorratsdruckleitung 16' steht der erste Druckeingang 50' des Wechselventils 101 mit dem Vorderachs-Druckluftspeicher 14 in Verbindung. Unter dem Einfluß des jeweils höheren Drucks an einem der beiden Druckeingänge beaufschlagt der Ventilkörper 163 einen dem jeweils gegenüberliegenden Druckeingang zugeordneten Ventilsitz. Dadurch wird dieser Druckeingang abgesperrt und ein sich von dem mit dem höheren Druck beaufschlagten Druckeingang zu dem Druckausgang 51 erstreckender Strömungskanal gebildet.

Fig. 5 zeigt ein dritte Ausführungsform der erfindungsgemäßen Umschaltventileinrichtung 100, welche ein federbelastetes 3/2-Wegeventil 103 umfaßt. An einen ersten Eingang 50' des 3/2 - Wegeventils 103 ist die Vorratsdruckleitung 16' des Vorderachs-Druckluftspeichers 14 angeschlossen, während ein zweiter Eingang 50" des Ventils 103 mit der zum Hilfsspeicher 12 führenden Vorratsdruckleitung 36 verbunden ist. Desweiteren ist das 3/2-Wegeventil 103 mit einem ersten Steuereingang 52 an die die pneumatischen Steuerdrucksignale des Hinterachs - Bremskreises führende Verbindungsleitung 32 angeschlossen und steht mit einem zweiten Steuereingang 170 über eine von der Vorratsdruckleitung 16' abgezweigte Leitung in Verbindung. In seiner Ruhestellung sperrt das 3/2-Wegeventil 103 die Vorratsdruckleitung 36 ab und verbindet gleichzeitig die Vorratsdruckleitung 16 mit seinem Ausgang 51, während in seiner zweiten Stellung die Vorratsdruckleitung 16 abgesperrt und die Vorratsdruckleitung 36 mit dem Ausgang 51 verbunden ist. Dieser Ausgang 51 ist über die Leitung 16 an den ersten Druckeingang 7 des Druckregelmoduls 6 angeschlossen. Die Ansteuerung des 3/2-Wegeventils 103 erfolgt somit über die Steuerdruckleitung 32 des Hinterachs-Rückhalt-Bremskreises.

Bei intaktem Vorderachs-Bremskreis bleibt das 3/2-Wegeventil 103 in seiner Ruhestellung, so daß an dem ersten Druckeingang 7 des Druckregelmoduls 6 der Druck aus dem Druckluftspeicher 14 ansteht, während an den zweiten Druckeingang 9 der über die Steuerdruckleitung 17 zugeführte Steuerdruck p_{VA} gelangt. Bei Druckabfall im pneumatischen Vorderachs-Bremskreis sinkt sowohl der Druck am Eingang 50' des 3/2-Wegeventils 103 als auch an dessen Steuereingang 170 ab, so daß das 3/2-Wegeventil 103 bei einer Bremsung infolge des Druckes p_{HA} in der Steuerdruckleitung 32 in seine zweite Stellung schaltet, wobei nunmehr an dessen Ausgang 51 und somit an dem ersten Druckeingang 7 des Druckregelmoduls 6 der gestufte Hilfsdruck aus dem Hilfsspeicher 12 ansteht.

Fig. 6 veranschaulicht eine stark schematisiert gehaltene Realisierung der dritten Ausführungsform der erfindungsgemäßen Umschaltventileinrichtung 100. Dabei weist das 3/2-Wegeventil 103 ein Ventilgehäuse 180 auf, innerhalb dessen ein Ventilkolben 181 längsbeweglich angeordnet ist, um wechselweise jeweils einen sich von einem ersten oder zweiten Einlaßventil 50', 50'' zu einem Auslaßventil 51 erstreckenden Strömungskanal zu schalten. Eine erste Steuerkammer 182 ist durch eine erste Wirkfläche 183 des Ventilkolbens 181 und eine Anschlagwand 184 des Ventilgehäuses 180 begrenzt, wobei der Ventilkolben 181 mittels einer in der Steuerkammer 182 angeordneten Ventilfeder 185 vorgespannt ist und die Steuerkammer 182 einen zum Druckeingang 50' mündenden Einlaßkanal 195 aufweist. Eine zweite Steuerkammer 186 ist durch eine zweite Wirkfläche 187 des Ventilkolbens 181 und eine Zwischenwand 188 des Ventilgehäuses 180 begrenzt und weist einen seitlich angeordneten Steuereingang 52 für den Steuerdruck p_{HA} auf. Mit seinem den Wirkflächen 183, 187 abgewandten Ende ragt der Ventilkolben 181 in eine Arbeitskammer 189, welche das erste und zweite Einlaßventil 50', 50'', das Auslaßventil 51 sowie einen mittels einer Ventilfeder 190 dem zweiten Einlaßventil vorgelagerten Schließkörper 191 beinhaltet, wobei das Ende des Ventilkolbens 181 dem Schließkörper 191 zugewandt ist. Im übrigen ist zwischen der Arbeitskammer 189 und der zweiten Steuerkammer 186 ein mit der Atmosphäre verbundener Zwischenentlüftungskanal 196 angeordnet, wobei eine auf der dem Einlaßkanal 195 zugewandten Seite radial zwischen der ersten und zweiten Wirkfläche 183, 187 ausmündende Durchführung 197 des Ventilkolbens 181 in einer Extremalposition des Ventilkolbens 181 mit dem Zwischenentlüftungskanal 196 und in einer anderen Extremalposition mit dem Einlaßkanal 195 kommuniziert.

Damit ergibt sich für die in Fig. 6 dargestellte Umschaltventileinrichtung 100 folgende Funktionsweise: Treten im Vorderachs-Druckluftspeicher 14 keine Druckverluste auf, so wirken auf die erste Wirkfläche 183 die Federkraft der Ventilfeder und der stationäre Druck aus dem Druckluftspeicher 14 ein, wodurch sich der Ventilkolben 181 zum Schließkörper 191 hin bewegt und den Schließkörper 191 unter Kompression von dessen Ventilfeder 190 auf das Einlaßventil 50" drückt. Dadurch wird das Einlaßventil 50" abgesperrt, während gleichzeitig ein sich von dem ersten Einlaßventil 50' zum Auslaßventil 51 erstreckender Strömungskanal geöffnet wird, wobei Druckmittel vom Vorderachs-Druckluftspeicher 14 zum Auslaßventil 51 strömen. Bei einem Druckabfall im Vorderachs-Druckluftspeicher 14 sinkt der Druck sowohl am Einlaßventil 50' als auch in dem davon abgezweigten Einlaßkanal 195 zur Steuerkammer 182 ab, so daß an der ersten Wirkfläche 183 lediglich die Ventilfeder 185 angreift, während die zweite Wirkfläche 187 von dem über den Steuereingang 52 in die Steuerkammer 186 eingesteuerten Steuerdruck p_{HA} beaufschlagt wird. Die resultierende Kraft drängt den Ventilkolben 181 zurück, wobei der Schließkörper 191 vom Einlaßventil 50" abhebt und das andere Einlaßventil 50' absperrt, so daß ein sich von dem Enlaßventil 50" zum Auslaßventil 51 erstreckender Strömungskanal geöffnet wird, über den Druckmittel von dem angeschlossenen Hilfsspeicher 12 zum Auslaßventil 51 abströmen.

Fig. 7 zeigt eine vierte Ausführungsform der erfindungsgemäßen Umschaltventileinrichtung 100, bei der das 3/2-Wegeventil 103 der dritten Ausführungsform als elektrisch ansteuerbares federbelastetes Magnetventil ausgebildet ist. Die pneumatischen Anschlüssen 50', 50'', 51 sind in gleicher Weise in bei der in Fig. 5 erläuterten Ausführungsform belegt, während die pneumatische Ansteuerung der dritten Ausführungsform durch eine elektrische Ansteuerung ersetzt ist. Dazu dient ein Vorsteuermagnet 103' des Magnetventils 103, dessen elektrischer Anschluß über eine elektrische Steuerleitung 45 mit der elektronischen Steuereinheit 20 wirkverbunden ist. In seiner die Ruhestellung definierenden ersten unbestromten Stellung ist der mit dem Vorderachs-Druckluftspeicher 14 in Verbindung stehende erste Druckeingang 50' mit dem Druckausgang 51 des Magnetventils 103 verbunden, während gleichzeitig der mit dem Hilfsspeicher 12 in Verbindung stehende zweite Druckeingang 50" abgesperrt ist. Demgegenüber ist in der zweiten - bestromten - Stellung der mit dem Vorderachs-Druckluftspeicher 14 verbundene erste Druckeingang 50' abgesperrt, während gleichzeitig der mit dem Hilfsspeicher 12 verbundene zweite Druckeingang 50" auf den Druckausgang 51 durchgeschaltet ist.

Für die vierte Ausführungsform ergibt sich somit folgende Funktionsweise: Treten im Vorderachs-Druckluftspeicher 14 und in der zugeordneten Vorratsdruckleitung keine Druckverluste auf, so bleibt das Magnetventil 103 in seiner unbestromten Stellung, in welcher der Druckausgang 51 mit dem Druckluftspeicher 14 verbunden ist. Bei Auftreten eines Druckverlustes im Vorderachs-Bremskreis übermittelt die zentrale elektronische Steuereinrichtung 20 ein elektrisches Steuersignal an die elektromagnetische Vorsteuerung 103' des Magnetventils 103, das dadurch in seine bestromte zweite Stellung wechselt, in welcher der Druckausgang 51 mit dem Hilfsspeicher 12 verbunden ist.

Fig. 8 zeigt schließlich eine fünfte Ausführungsform der erfindungsgemäßen Umschaltventileinrichtung 100, welche ein Wechselventil 101, ein Relaisventil 104 und ein als federbelastetes Magnetventil ausgebildetes 3/2-Wegeventil 103 umfaßt. Dabei ist Wechselventil 101 mit seinem ersten Druckeingang 50' über die Leitung 16' mit dem Vorderachs-Druckluftspeicher 14 verbunden, während ein Druckeingang 50" des Relaisventils 104 über die Leitung 36 mit dem Hilfsspeicher 12 in Verbindung steht. Mit seinem zweiten Druckeingang ist das Wechselventil 101 über eine Verbindungsleitung 61 an den Druckausgang des Relaisventils 104 angeschlossen, während der Druckausgang 51 des Wechselventils 101 zum Druckeingang 7 des Druckregelmoduls 6 führt. Zur pneumatischen Ansteuerung der erfindungsgemäßen Umschaltventileinrichtung 100 ist das 3/2-Wegeventil 103 mit seinem ersten Druckeingang mit der Atmosphäre verbunden, während dessen zweiter Druckeingang an die Steuerdruckleitung 32 des Hinterachs-Rückhaltkreises angeschlossen und sein Druckausgang über eine Leitung 44 mit einer Steuerkammer 104' des Relaisventils 104 verbunden ist. Zudem ist die elektromagnetische Vorsteuerung 103' des 3/2-Wegeventils 103 über eine elektrische Leitung 45 mit der zentralen elektronischen Steuereinheit 20 wirkverbunden. In seiner stromlosen ersten die Ruhestellung definierenden Stellung sperrt das 3/2-Wegeventil 103 den zweiten Druckeingang mit der daran angeschlossenen Steuerdruckleitung 32 ab und verbindet gleichzeitig seinen Ausgang mit dem am ersten Druckeingang anstehenden Atmosphärendruck, so daß die mit diesem Ausgang in Verbindung stehende Steuerkammer 104' des Relaisventils 104 entlüftet ist. Demgegenüber ist in der bestromten zweiten Schaltstellung des 3/2-Wegeventils 103 dessen erster Druckeingang abgesperrt und gleichzeitig die Steuerdruckleitung 32 des Hinterachs-Rückhaltkreises auf den Ausgang und somit auf die Steuerkammer 104' des Relaisventils 104 durchgeschaltet, so daß die Steuerkammer 104' unter dem Steuerdruck p_{HA} des Hinterachs-Rückhaltkreises steht.

Somit ergibt sich bei einer über das Betriebsbremsventil 15 eingeleiteten Bremsung für die Umschaltventileinrichtung 100 gemäß der in Fig. 1 veranschaulichten ersten Ausführungsform folgende Funktionsweise: Treten im elektropneumatischen und/oder pneumatischen Vorderachs-Bremskreis keine Druckverluste auf, so bleibt das 3/2-Wegeventil 103 in seiner ersten unbestromten Stellung, wobei der am ersten Druckeingang anstehende Atmosphärendruck auf den Ausgang und die daran angeschlossene Steuerkammer 104' des Relaisventils 104 durchgeschaltet ist. Da somit die Steuerkammer 104' entlüftet ist, bleibt die vom Druckausgang des Relaisventils 104 zum zweiten Druckeingang des Wechselventils 101 führende Leitung entlüftet, während an dem ersten Druckeingang 50' des Wechselventils 101 der über die Leitung 16' zugeführte Druck aus dem Vorderachs-Druckluftspeicher 14 ansteht. Somit wird der am ersten Druckeingang 50' anstehende Druck auf den Ausgang 51 des Wechselventils 101 durchgeschaltet und gelangt zum Druckeingang 7 des Druckregelmoduls 6.

Bei einem Druckabfall im pneumatischen oder elektropneumatischen Vorderachs-Bremskreis während einer Bremsung übermittelt die zentrale elektronische Steuereinheit 20 aufgrund eines den Druckabfall erfassenden Drucksteuerventils oder Drucksensors ein elektrisches Ansteuersignal über die Leitung 45 an die elektromagnetische Vorsteuerung 103' des 3/2-Wegeventils 103, so daß das 3/2-Wegeventil 103 aus seiner Ruhestellung in seine bestromte zweite Stellung umschaltet. In dieser zweiten Schaltstellung schaltet das 3/2-Wegeventil 103 den am zweiten Druckeingang anstehenden Steuerdruck p_{HA} des Hinterachs - Rückhaltkreises auf seinen Druckausgang und somit zur Steuerkammer 104' des Relaisventils 104 durch. Da das Relaisventil 104 nunmehr durch den vom Betriebsbremsventil 15 ausgesteuerten gestuften Steuerdruck p_{HA} angesteuert wird, ist auch der vom Hilfsspeicher 12 abgeleitete und über das Relaisventil 104 an seinen Druckausgang geschaltete Druck entsprechend gestuft. Dieser in Abhängigkeit von p_{HA} gestufte Druck gelangt über die Verbindungsleitung 61 an den zweiten Druckeingang des Wechselventils 101, während an dessen ersten Druckeingang 50' kein ausreichender Druck aus dem Vorderachs-Druckluftspeicher 14 ansteht, so daß der dem zweiten Druckeingang zugeführte gestufte Druck p_{HA} zum Druckausgang 51 durchgeschaltet und in den Druckeingang 7 des Druckregelmoduls 6 ausgesteuert wird.

Im übrigen kann nach einer in Fig. 9 dargestellten Ausführungsvariante der Umschaltventileinrichtung 100 zwischen dem zweiten Druckeingang 50" und dem über die Vorratsdruckleitung 36 angeschlossenen Hilfsspeicher 12 ein zusätzlicher Druckbegrenzer 107 angeordnet sein, dessen pneumatische Ansteuerung mit der Vorratsdruckleitung kurzgeschlossen ist, so daß an dem zweiten Druckeingang 50" ein druckhöhenbegrenzter Vorratsdruck ansteht.

## Patentansprüche

1. Druckmittelbetätigte Fahrzeugbremsanlage mit wenigstens einem ersten Bremskreis und einem zweiten Bremskreis mit folgenden Merkmalen:
a) Dem ersten Bremskreis ist wenigstens ein Bremszylinder (34) zugeordnet, der über eine erste Steuerventileinrichtung (31) in Abhängigkeit von einem dem ersten Bremskreis zugeordneten Steuersignal eines Mehrkreis-Bremswertgebers (15) mit einer Druckmittelquelle (27) für den ersten Bremskreis verbindbar ist,
b) dem zweiten Bremskreis sind ein erster Bremszylinder (2) und ein zweiter Bremszylinder (4) zugeordnet, die über eine zweite Steuerventileinrichtung (6) in Abhängigkeit von einem dem zweiten Bremskreis zugeordneten Steuersignal des Mehrkreis-Bremswertgebers (15) mit einer zweiten Druckmittelquelle (14) für den zweiten Bremskreis verbindbar sind,
c) eine Umschaltventileinrichtung (100) ist vorgesehen, die derart steuerbar ist, daß eine von der Druckmittelquelle (14) des zweiten Bremskreises unabhängige Druckmittelquelle (12) mit wenigstens einem Bremszylinder (2, 4) des zweiten Bremskreises verbindbar ist,
**dadurch gekennzeichnet, daß** die Umschaltventileinrichtung (100) mit einem ersten Druckeingang (50') an die dem zweiten Bremskreis zugeordnete Druckmittelquelle (14), mit einem zweiten Druckeingang (50") an die unabhängige Druckmittelquelle (12) und mit ihrem Druckausgang (51) sowohl an einen Steuereingang (15') des Mehrkreis-Bremswertgebers (15) als auch an einen Druckeingang (7) der zweiten Steuerventileinrichtung (6) angeschlossen ist.

2. Druckmittelbetätigte Fahrzeugbremsanlage nach Anspruch 1, **dadurch gekennzeichnet, daß** die Umschaltventileinrichtung (100) wenigstens einen durch ein dem ersten Bremskreis zugeordnetes Steuersignal ansteuerbaren pneumatischen Steuereingang (52) aufweist.

3. Druckmittelbetätigte Fahrzeugbremsanlage nach Anspruch 1 oder 2, **dadurch gekennzeichnet, daß** die Umschaltventileinrichtung (100) als Wechselventil (101) mit einem ersten und zweiten Druckeingang (50', 50") und einem Druckausgang (51) ausgebildet ist.

4. Druckmittelbetätigte Fahrzeugbremsanlage nach Anspruch 3, **dadurch gekennzeichnet, daß** die Umschaltventileinrichtung (100) wenigstens ein Zuschaltventil (102) umfaßt, das mit seinem Eingang zuströmseitig mit der unabhängigen Druckmittelquelle (12) und mit seinem Ausgang abströmseitig mit dem zweiten Druckeingang des Wechselventils (101) in Verbindung steht.

5. Druckmittelbetätigte Fahrzeugbremsanlage nach Anspruch 4, **dadurch gekennzeichnet, daß** das Zuschaltventil (102) durch ein dem ersten Bremskreis zugeordnetes Steuersignal ansteuerbar ist.

6. Druckmittelbetätigte Fahrzeugbremsanlage nach Anspruch 4 oder 5, **dadurch gekennzeichnet, daß** das Zuschaltventil (102) als Druckbegrenzer ausgebildet ist.

7. Druckmittelbetätigte Fahrzeugbremsanlage nach Anspruch 1 oder 2, **dadurch gekennzeichnet, daß** die Umschaltventileinrichtung (100) als 3/2-Wegeventil (103) ausgebildet ist, wobei ein erster Druckeingang (50') mit der Druckmittelquelle (14) und ein zweiter Druckeingang (50'') mit der unabhängigen Druckmittelquelle (12) in Verbindung steht und in seiner Ruhestellung seinen Ausgang mit der Druckmittelquelle (14) und in seiner zweiten Stellung seinen Ausgang mit der unabhängigen Druckmittelquelle (12) verbindet.

8. Druckmittelbetätigte Fahrzeugbremsanlage nach Anspruch 7, **dadurch gekennzeichnet, daß** an einem ersten Steuereingang (52) des 3/2-Wegeventils (103) das dem ersten Bremskreis zugeordnete Steuersignal ansteht und ein zweiter Steuereingang (170) mit der Druckmittelquelle (14) in Verbindung steht.

9. Druckmittelbetätigte Fahrzeugbremsanlage nach Anspruch 7, **dadurch gekennzeichnet, daß** das 3/2-Wegeventil (103) als Magnetventil mit einer elektrisch betätigbaren Vorsteuerung (103') ausgebildet ist.

10. Druckmittelbetätigte Fahrzeugbremsanlage nach Anspruch 9, **dadurch gekennzeichnet, daß** das 3/2-Wegeventil (103) im unbestromten Zustand der Vorsteuerung (103') seine Ruhestellung einnimmt und im bestromten Zustand in seine zweite Stellung wechselt.

11. Druckmittelbetätigte Fahrzeugbremsanlage nach Anspruch 1, **dadurch gekennzeichnet, daß** die Umschaltventileinrichtung (100) wenigstens ein Wechselventil (101), ein Relaisventil (104) und ein als Magnetventil ausgebildetes 3/2-Wegeventil (103) mit zumindest zwei Schaltzuständen umfaßt, daß der erste Druckeingang (50') der Umschaltventileinrichtung (100) dem ersten Druckeingang des Wechselventils (101) und der zweite Druckeingang (50") der Umschaltventileinrichtung (100) einem Druckeingang des Relaisventils (104) sowie der Druckausgang der Umschaltventileinrichtung (100) dem Druckausgang des Wechselventils (101) entspricht, wobei das Relaisventil (104) druckausgangsseitig mit dem zweiten Druckeingang des Wechselventils (101) verbunden ist und daß in einem von einem elektrischen Steuersignal abhängigen Schaltzustand des Magnetventils (103) ein druckeingangsseitig des Magnetventils (103) anstehendes pneumatisches Steuersignal einem Betätigungsmittel (104') des Relaisventils (104) zuschaltbar ist.

## Claims

1. Vehicle brake system operated by a pressurised medium, comprising at least one first brake circuit and one second brake circuit, presenting the following features:
(a) at least one brake cylinder (34) is associated to said first brake circuit, which is adapted for connection to a source of pressurised medium (27) for said first brake circuit via a first control valve means (31) in response to a control signal of a multi-circuit braking power generator (15), which is associated with said first brake circuit,
(b) a first brake cylinder (2) and a second brake cylinder (4) are associated with said second brake circuit, which are adapted for connection to a second source of pressurised medium (14) for said second brake circuit via a second control valve means (6) in response to a control signal of said multi-circuit braking power generator (15), which is associated with said second brake circuit,
(c) a change-over valve means (100) is provided that is controllable in such a way that a source of pressurised medium (12), which is independent of said source of pressurised medium (14) of said second brake circuit, can be connected to at least one brake cylinder (2, 4) of said second brake circuit,
**characterised in that** said change-over valve means (100) is connected by a first pressure admission port (50') to said source of pressurised medium (14) associated with said second brake circuit, by a second pressure admission port (50") to said independent source of pressurised medium (12) and by its pressure discharge port (51) to both a control input (15') of said multi-circuit braking power generator (15) and a pressure admission port (7) of said second control valve means (6).

2. Vehicle brake system operated by a pressurised medium according to Claim 1, **characterised in that** said changeover valve means (100) comprises at lest one pneumatic control input (52) that can be controlled by a control signal associated with said first brake circuit.

3. Vehicle brake system operated by a pressurised medium according to Claim 1 or 2, **characterised in that** said change-over valve means (100) is configured in the form of a shuttle valve (101) including a first and a second pressure admission port (50', 50") and one pressure discharge port (51 ).

4. Vehicle brake system operated by a pressurised medium according to Claim 3, **characterised in that** said change-over valve means (100) comprises at least one switch-on valve (102) that communicates by its admission port on the upstream side with said independent source of pressurised medium (12) and by its discharge port on the down stream side with said second pressure admission port of said shuttle valve (101).

5. Vehicle brake system operated by a pressurised medium according to Claim 4, **characterised in that** said switch-on valve (102) is controllable by a control signal associated with said first brake circuit.

6. Vehicle brake system operated by a pressurised medium according to Claim 4 or 5, **characterised in that** said switch-on valve (102) is configured in the form of a pressure-limiting component.

7. Vehicle brake system operated by a pressurised medium according to Claim 1 or 2, **characterised in that** said change-over valve means (100) is configured in the form of a 3/2-way valve (103), with a first pressure admission port (50') communicating with said source of pressurised medium (14) and a second pressure admission port (50") communicating with said independent source of pressurised medium (12) and, in its inoperative position, communicating its discharge port to said source of pressurised medium (14) and, in a second position, communicating its discharge port to said independent source of pressurised medium (12).

8. Vehicle brake system operated by a pressurised medium according to Claim 7, **characterised in that** said control signal associated with said first brake circuit is applied to a first control input (52) of said 3/2-way valve (103) whilst a second control input (170) communicates with said source of pressurised medium (14).

9. Vehicle brake system operated by a pressurised medium according to Claim 7, **characterised in that** said 3/2-way valve (103) is configured in the form of a solenoid valve including an electrically operable governor system (103').

10. Vehicle brake system operated by a pressurised medium according to Claim 9, **characterised in that** in the non-energised condition of said governor system (103'), said 3/2-way valve (103) assumes its inoperative position whilst in the energised condition it changes over to its second position.

11. Vehicle brake system operated by a pressurised medium according to Claim 1, **characterised in that** said change-over valve means (100) comprises at least one shuttle valve (101), one relay valve (104) and one 3/2-way valve (103) configured as solenoid valve with at least two switching conditions, that said first pressure admission port (50') of said change-over valve means (100) corresponds to said first pressure admission port of said shuttle valve (101) and said second pressure admission port (50") of said change-over valve means (100) corresponds to a pressure admission port of said relay valve (104) and said pressure discharge port of said change-over valve means (100) corresponds to the pressure discharge port of said change-over valve (101), with said relay valve (104) being connected, on the pressure discharge side, to said second pressure admission port of said change-over valve (101), and that in a switching condition of said solenoid valve (103), which is dependent on an electrical control signal, a pneumatic control signal applied on the pressure admission side of said solenoid valve (103) can be switched on an actuator means (104') of said relay valve (104).

## Revendications

1. Installation de freinage de véhicule actionnée par un moyen de pression comportant au moins un premier circuit de freinage et un deuxième circuit de freinage comportant les caractéristiques suivantes :
a) on associe au premier circuit de freinage au moins un cylindre de frein (34) qui peut être relié à une source de moyen de pression (27) pour le premier circuit de freinage au moyen d'une première installation de vanne pilote (31) en fonction d'un signal de commande, associé au premier circuit de freinage, d'un générateur de valeur de freinage à plusieurs circuits (15),
b) on associe au deuxième circuit de freinage un premier cylindre de frein (2) et un deuxième cylindre de frein (4) qui peuvent être reliés à une deuxième source de moyen de pression (14) pour le deuxième circuit de freinage au moyen d'une deuxième installation de vanne pilote (6) en fonction d'un signal de commande, associé au deuxième circuit de freinage, du générateur de valeur de freinage à plusieurs circuits (15),
c) on prévoit une installation de vanne d'inversion (100) qui peut être commandée de telle manière qu'une source de moyen de pression (12) indépendante de la source de moyen de pression (14) du deuxième circuit de freinage peut être reliée à au moins un cylindre de frein (2, 4) du deuxième circuit de freinage,
**caractérisée en ce que** l'installation de vanne d'inversion (100) est raccordée à une première entrée de pression (50') sur la source de moyen de pression (14) associée au deuxième circuit de freinage, à une deuxième entrée de pression (50") sur la source de moyen de pression (12) indépendante et à sa sortie de pression (51) aussi bien sur une entrée de commande (15') du générateur de valeur de freinage à plusieurs circuits (15) que sur une entrée de pression (7) de la deuxième installation de vanne pilote (6).

2. Installation de freinage de véhicule actionnée par un moyen de pression selon la revendication 1, **caractérisée en ce que** l'installation de vanne d'inversion (100) présente au moins une entrée de commande (52) pneumatique qu'on peut commander par un signal de commande associé au premier circuit de freinage.

3. Installation de freinage de véhicule actionnée par un moyen de pression selon la revendication 1 ou 2, **caractérisée en ce que** l'installation de vanne d'inversion (100) est conçue en tant que vanne à deux voies (101 ) comportant une première et une deuxième entrée de pression (50', 50") et comportant une sortie de pression (51).

4. Installation de freinage de véhicule actionnée par un moyen de pression selon la revendication 3, **caractérisée en ce que** l'installation de vanne d'inversion (100) comprend au moins une soupape de mise en circuit (102) qui à son entrée côté affluence est en liaison avec la source de moyen de pression (12) indépendante et à sa sortie côté écoulement avec la deuxième entrée de pression de la vanne à deux voies (101).

5. Installation de freinage de véhicule actionnée par un moyen de pression selon la revendication 4, **caractérisée en ce que** la soupape de mise en circuit (102) peut être commandée par un signal de commande associé au premier circuit de freinage.

6. Installation de freinage de véhicule actionnée par un moyen de pression selon la revendication 4 ou 5, **caractérisée en ce que** la soupape de mise en circuit (102) est conçue en tant que limiteur de pression.

7. Installation de freinage de véhicule actionnée par un moyen de pression selon la revendication 1 ou 2, **caractérisée en ce que** l'installation de vanne d'inversion (100) est conçue en tant que distributeur à 3/2 voies (103), une première entrée de pression (50') étant en liaison avec la source de moyen de pression (14) et une deuxième entrée de pression (50") avec la source de moyen de pression (12) indépendante et dans sa position de repos reliant sa sortie à la source de moyen de pression (14) et dans sa deuxième position sa sortie à la source de moyen de pression (12) indépendante.

8. Installation de freinage de véhicule actionnée par un moyen de pression selon la revendication 7, **caractérisée en ce que** le signal de commande associé au premier circuit de freinage est appliqué à une première entrée de commande (52) du distributeur à 3/2 voies (103) et une deuxième entrée de commande (170) est en liaison avec la source de moyen de pression (14).

9. Installation de freinage de véhicule actionnée par un moyen de pression selon la revendication 7, **caractérisée en ce que** le distributeur à 3/2 voies (103) est conçu en tant que vanne magnétique comportant une commande pilote (103') qu'on peut actionner électriquement.

10. Installation de freinage de véhicule actionnée par un moyen de pression selon la revendication 9, **caractérisée en ce que** le distributeur à 3/2 voies (103) se met dans sa position de repos à l'état ― non traversé par le courant ― de la commande pilote (103') et passe dans sa deuxième position à l'état traversé par le courant.

11. Installation de freinage de véhicule actionnée par un moyen de pression selon la revendication 1, **caractérisée en ce que** l'installation de vanne d'inversion (100) comprend au moins une vanne à deux voies (101), une vanne relais (104) et un distributeur à 3/2 voies (103) conçu en tant que vanne magnétique à au moins deux états de commutation, que la première entrée de pression (50') de l'installation de vanne d'inversion (100) correspond à la première entrée de pression de la vanne à deux voies (101) et la deuxième entrée de pression (50") de l'installation de vanne d'inversion (100) à une entrée de pression (50") de la vanne relais (104) ainsi que la sortie de pression de l'installation de vanne d'inversion (100) à la sortie de pression de la vanne à deux voies (101), la vanne relais (104) côté sortie de pression étant reliée à la deuxième entrée de pression de la vanne à deux voies (101), et que, dans un état de commutation de la vanne magnétique (103) qui dépend d'un signal de commande électrique, un signal de commande côté entrée de pression de la vanne magnétique (103) peut être commuté à un moyen d'actionnement (104') de la vanne relais (104).
